(19)

Europäisches
Patentamt
European
Patent Office
Office européen
des brevets

(11) **EP 4 283 715 A1**

(12) **EUROPEAN PATENT APPLICATION**
published in accordance with Art. 153(4) EPC

(43) Date of publication:
**29.11.2023 Bulletin 2023/48**

(21) Application number: **21921252.9**

(22) Date of filing: **07.12.2021**

(51) International Patent Classification (IPC):
**H01M 4/36** (2006.01)     **H01M 4/48** (2010.01)
**H01M 4/58** (2010.01)

(52) Cooperative Patent Classification (CPC):
**H01M 4/36; H01M 4/48; H01M 4/58;** Y02E 60/10

(86) International application number:
**PCT/JP2021/044846**

(87) International publication number:
**WO 2022/158150 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.01.2021   JP 2021009869**

(71) Applicant: **SHIN-ETSU CHEMICAL CO., LTD.
Tokyo 1000005 (JP)**

(72) Inventors:
• **HIROSE Takakazu
Annaka-shi, Gunma 379-0125 (JP)**
• **MATSUNO Takumi
Annaka-shi, Gunma 379-0125 (JP)**
• **OSAWA Yusuke
Annaka-shi, Gunma 379-0125 (JP)**
• **SAKAI Reiko
Annaka-shi, Gunma 379-0125 (JP)**
• **KOIDE Hiroyuki
Annaka-shi, Gunma 379-0125 (JP)**

(74) Representative: **Sonnenhauser, Thomas Martin
Wuesthoff & Wuesthoff
Patentanwälte PartG mbB
Schweigerstraße 2
81541 München (DE)**

(54) **NEGATIVE ELECTRODE ACTIVE MATERIAL FOR NON AQUEOUS ELECTROLYTE SECONDARY BATTERIES, AND METHOD FOR PRODUCING NEGATIVE ELECTRODE ACTIVE MATERIAL FOR NON AQUEOUS ELECTROLYTE SECONDARY BATTERIES**

(57)     The present invention is a negative electrode active material for a non-aqueous electrolyte secondary battery, the negative electrode active material including a negative electrode active material particle, wherein the negative electrode active material particle contains a silicon compound particle containing a silicon compound containing oxygen, at least a part of a surface of the silicon compound particle is coated with a carbon layer, the silicon compound particle contains $Li_2SiO_3$ as a Li silicate, the $Li_2SiO_3$ is a material in which at least a part of the $Li_2SiO_3$ is to change into $Li_4SiO_4$ by charging and discharging the negative electrode active material particle once or more, and an abundance ratio of the $Li_2SiO_3$ is higher than an abundance ratio of the $Li_4SiO_4$ before charging and discharging the negative electrode active material particle, and the abundance ratio of the $Li_4SiO_4$ is higher than the abundance ratio of the $Li_2SiO_3$ after charge and discharge at 100 times. This can provide a negative electrode active material that can achieve increase in a battery capacity with improvement of an initial efficiency, sufficient battery cycle characteristics, and input characteristics

[FIG. 7]

**Description**

TECHNICAL FIELD

The present invention relates to a negative electrode active material for a non-aqueous electrolyte secondary battery, and a method for manufacturing a negative electrode active material for a non-aqueous electrolyte secondary battery.

BACKGROUND ART

In recent years, small electronic devices, represented by mobile terminals, have been widely used, and further size reduction, weight reduction, and lifetime extension have been strongly required. For such market requirements, development of particularly small, lightweight secondary batteries that can yield a high energy density is in progress. These secondary batteries are investigated to be applied for not only small electronic devices but also for large electronic devices such as, typically, automobiles and power storage systems for, typically, a house.

Among these, a lithium-ion secondary battery is highly promising because the size reduction and increase in a capacity are easily achieved, and it can yield a higher energy density than a lead battery and a nickelcadmium battery.

The above lithium-ion secondary battery includes a positive electrode, a negative electrode, a separator, and an electrolyte liquid, and the negative electrode contains a negative electrode active material contributing to charge and discharge reactions.

For this negative electrode active material, a carbon-based active material is widely used, and meanwhile, the recent market has required further improvement of the battery capacity. To improve the battery capacity, investigated is use of silicon as a material of the negative electrode active material. This is because a theoretical capacity of silicon (4199 mAh/g) is ten times or more higher than a theoretical capacity of graphite (372 mAh/g), and thereby much improvement of the battery capacity can be expected. With the development of the silicon material as the material of the negative electrode active material, not only silicon single substance but also a compound, etc., such as, typically, an alloy and an oxide are investigated. A shape of the active material is investigated from applying-type, which is a standard for the carbon-based active material, to integrated-type in which the active material is directly deposited on a current collector.

However, using silicon as a main raw material of the negative electrode active material is likely to cause cracking mainly near a surface layer of the negative electrode active material due to expansion and contraction of the negative electrode active material during charge and discharge. In addition, an ionic substance is generated inside the active material, which causes the negative electrode active material to be a substance easily cracked. A cracking of the surface layer of the negative electrode active material generates a new surface to increase a reaction area of the active material. In this time, a decomposition reaction of the electrolyte liquid occurs on the new surface and a coating that is a decomposed product of the electrolyte liquid is formed on the new surface, which consume the electrolyte liquid. Thus, the cycle characteristics is likely to be deteriorated.

To improve initial efficiency and cycle characteristics of the battery, various investigations have been made so far on a negative electrode material mainly containing the silicon material and electrode constitution for a lithium-ion secondary battery.

Specifically, for a purpose of obtaining good cycle characteristics and high safety, silicon and amorphous silicon dioxide are simultaneously deposited by using a gas phase method (for example, see Patent Document 1). To obtain a high battery capacity and safety, a carbon material (electron-conducting material) is provided on a surface layer of a silicon oxide particle (for example, see Patent Document 2). Furthermore, to improve the cycle characteristics and to obtain high input-and-output characteristics, an active material containing silicon and oxygen is produced to form an active material layer having a high oxygen ratio near a current collector (for example, see Patent Document 3). To improve the cycle characteristics, oxygen is contained in a silicon active material to form an active material layer so that an average oxygen content is 40 at% or less and so that an oxygen content is larger near a current collector (for example, see Patent Document 4).

To improve the initial charge-and-discharge efficiency, a nano-composite having a Si phase, $SiO_2$, and a $M_yO$ metal oxide is used (for example, see Patent Document 5). To improve the cycle characteristics, $SiO_x$ ($0.8 \leq x \leq 1.5$ and particle diameter range = 1 um to 50 um) and a carbon material are mixed and the mixture is calcined at a high temperature (for example, see Patent Document 6). To improve the cycle characteristics, a mole ratio of oxygen to silicon in a negative electrode active material is set to 0.1 to 1.2, and the active material is regulated within a range that a difference of maximum value and minimum value in the mole ratio near an interface between the active material and a current collector is 0.4 or less (for example, see Patent Document 7). To improve battery load characteristics, a metal oxide containing lithium is used (for example, see Patent Document 8). To improve the cycle characteristics, a hydrophobic layer such as a silane compound is formed on a surface layer of a silicon material (for example, see Patent Document 9). To improve the cycle characteristics, silicon oxide is used and a graphite coating is formed on a surface layer of the silicon oxide to impart conductivity (for example, see Patent Document 10). In Patent Document 10, regarding a shift value obtained by a RAMAN spectrum corresponding to the graphite coating, broad peaks appear at 1330 $cm^{-1}$ and 1580 $cm^{-1}$, and a strength ratio thereof $I_{1330}/I_{1580}$ is $1.5 < I_{1330}/I_{1580} < 3$. To achieve the high battery capacity and to improve the cycle characteristics, a particle having a silicon fine crystal phase dispersed in silicon dioxide is used (for example, see Patent Document 11). To improve overcharge-and-overdischarge characteristics, a silicon oxide in which an atomic ratio between silicon and oxygen is regulated to $1 : y$ $(0 < y < 2)$ is used (for example, see Patent Document 12).

As a lithium-ion secondary battery using silicon oxide, Hitachi Maxell, Ltd. started to ship a prismatic secondary battery for a smartphone that adopted a nano-silicon composite in June, 2010 (for example, see Non Patent Document 1). Silicon oxide proposed by Hohl is a composite material with $Si^{0+}$ to $Si^{4+}$, which has various oxidation states (see Non Patent Document 2). Kapaklis proposes a disproportionation structure that is to be separated into Si and $SiO_2$ by applying thermal load to silicon oxide (see Non Patent Document 3). Miyachi et al. pay attention to Si and $SiO_2$, which contribute to charge and discharge, among the silicon oxide having the disproportionation structure (see Non Patent Document 4), and Yamada et al. propose a formula of a reaction between the silicon oxide and Li as follows (see Non Patent Document 5).

$$2SiO(Si+SiO_2) + 6.85Li^+ + 6.85e^- \rightarrow 1.4Li_{3.75}Si + 0.4Li_4SiO_4 + 0.2SiO_2$$

The above reaction formula indicates that Si and $SiO_2$ constituting silicon oxide react with Li to be separated into a Li silicide and a Li silicate, and partially unreacted $SiO_2$.

Here, the generated Li silicate, which is irreversible component, is considered to be a stable substance not leasing Li after once formed. A capacity per weight calculated from this reaction formula has a value close to an experimental value, and this reaction formula is recognized as a reaction mechanism of silicon oxide. Kim et al. identify the Li silicate, which is the irreversible component generated with charge and discharge of silicon oxide, as $Li_4SiO_4$ by using $^7$Li-MAS-NMR and $^{29}$Si-MAS-NMR (see Non Patent Document 6).

This irreversible capacity is the weakest point of silicon oxide, and improvement is required. Accordingly, Kim et al. produce a negative electrode having remarkably improved initial efficiency as a battery and being practically usable by using a Li pre-doping method to form the Li silicate in advance (see Non Patent Document 7).

There was also proposed a method of treating a powder, not Li-doping the electrode, to achieve the improvement of the irreversible capacity (see Patent Document 13).

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A

NON PATENT LITERATURE

Non Patent Document 1: Battery Association of Japan, Newsletter "Denchi (battery)", May 1, 2010, p. 10
Non Patent Literature 2: A. Hohl, T. Wieder, P. A. van Aken, T. E. Weirich, G. Denninger, M. Vidal, S. Oswald, C. Deneke, J. Mayer, and H. Fuess : J. Non-Cryst. Solids, 320, (2003), 255.

Non Patent Literature 3: V. Kapaklis, J. Non-Crystalline Solids, 354 (2008) 612

Non Patent Literature 4: Mariko Miyachi, Hironori Yamamoto, and Hidemasa Kawai, J. Electrochem. Soc. 2007 volume 154, issue 4, A376-A380

Non Patent Literature 5: M. Yamada, M. Inaba, A. Ueda, K. Matsumoto, T. Iwasaki, T. Ohzuku, J. Electrochem. Soc., 159, A1630 (2012)

Non Patent Literature 6: Taeahn Kim, Sangjin Park, and Seung M. Oh, J. Electrochem. Soc. volume 154,(2007), A1112-A1117.

Non Patent Literature 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.

## SUMMARY OF INVENTION

### TECHNICAL PROBLEM

As noted above, in recent years, improvement of performance and higher functionalization of small electronic devices, such as, typically, mobile terminals, are in progress, and a lithium-ion secondary battery, which is a main power source therefor, is required to have an increased battery capacity. Desired as one solution for this problem is development of a lithium-ion secondary battery having a negative electrode using a silicon material as a main material. The lithium-ion secondary battery using a silicon material is desired to have initial-stage charge-and-discharge characteristics and cycle characteristics approximately equivalent to those of a lithium-ion secondary battery using a carbon-based active material. Accordingly, the cycle characteristics and the initial-stage charge-and-discharge characteristics have been improved by using, as a negative electrode active material, a silicon oxide modified by inserting and partially releasing Li. However, when a Li silicate generated by charge-and-discharge has a stable state with respect to charge and discharge, Li is not smoothly inserted during charge and discharge, which deteriorates high-speed charging ability. Poor Li diffusibility in bulk promotes disproportionation of the silicon oxide, and a generated silicon promotes decomposition of an electrolyte liquid on a surface layer, which causes insufficient battery characteristics.

The present invention has been made in view of the above problem. An object of the present invention is to provide: a negative electrode active material that can achieve increase in the battery capacity with improvement of the initial efficiency, sufficient battery cycle characteristics, and input characteristics; and a method for manufacturing such a negative electrode active material for a non-aqueous electrolyte secondary battery.

### SOLUTION TO PROBLEM

To solve the above problem, the present invention provides a negative electrode active material for a non-aqueous electrolyte secondary battery, the negative electrode active material comprising a negative electrode active material particle, wherein

the negative electrode active material particle contains a silicon compound particle containing a silicon compound containing oxygen,

at least a part of a surface of the silicon compound particle is coated with a carbon layer,

the silicon compound particle contains $Li_2SiO_3$ as a Li silicate,

the $Li_2SiO_3$ is a material in which at least a part of the $Li_2SiO_3$ is to change into $Li_4SiO_4$ by charging and discharging the negative electrode active material particle once or more, and

an abundance ratio of the $Li_2SiO_3$ is higher than an abundance ratio of the $Li_4SiO_4$ before charging and discharging the negative electrode active material particle, and the abundance ratio of the $Li_4SiO_4$ is higher than the abundance ratio of the $Li_2SiO_3$ after charge and discharge at 100 times.

The inventive negative electrode active material for a non-aqueous electrolyte secondary battery can yield an effect of improving the Li diffusibility in bulk, which can improve the input characteristics (high-speed charging ability) required by the market. Therefore, the inventive negative electrode active material for a non-aqueous electrolyte secondary battery can achieve excellent high-speed changing ability.

Furthermore, the inventive negative electrode active material for a non-aqueous electrolyte secondary battery, which contains the negative electrode active material particle containing the silicon compound particle containing the silicon compound containing oxygen, can improve the battery capacity. The silicon compound particle containing $Li_2SiO_3$ as a Li silicate can achieve excellent cycle characteristics and excellent initial-stage charge-discharge characteristics, and in addition, a slurry can be stabilized before applying, which yields a good electrode to further improve the battery characteristics.

The $Li_4SiO_4$ is preferably a reversible component that contributes to charge and discharge during charge and discharge of the negative electrode active material particle at least 10 times.

Such a negative electrode active material can further improve the high-speed charging ability.

The negative electrode active material particle preferably has, before charge and discharge of the negative electrode active material particle, a peak derived from a Si (111) crystal plane obtained by X-ray diffraction using Cu-K$\alpha$ ray, a size of a crystallite corresponding to the crystal plane is preferably 5.0 nm or less, and a ratio A/B of a strength A of the peak derived from the Si (111) crystal plane to a strength B of a peak derived from a $Li_2SiO_3$ (111) crystal plane preferably satisfies the following formula (1),

$$0.4 \leq A/B \leq 1.0 \qquad \cdots (1)$$

Such a negative electrode active material can inhibit elution of $Li_2SiO_3$ during preparation of the slurry and can reduce reactivity with the electrolyte liquid, which can further improve the battery characteristics.

The negative electrode active material particle desirably has a median diameter of 5.5 um or more and 15 um or less.

When the median diameter is within the above range, the reaction with the electrolyte liquid and expansion of the active material with charge and discharge can be inhibited, and the deterioration in the battery characteristics can be prevented.

The negative electrode active material particle desirably has a true density of 2.3 g/cm³ or more and 2.4 g/cm³ or less before charge and discharge.

When the true density before charge and discharge of the negative electrode active material particle is within the above range, the density of the electrode can be increased while inhibiting cracking during expansion and contraction.

The negative electrode active material particle desirably has an oxygen-containing carbon layer on at least an outermost surface of the carbon layer, and wherein, in the oxygen-containing carbon layer, a carbon atom and an oxygen atom are present in a state of a compound where a carbon atom and an oxygen atom are chemically bonded to each other.

Such a negative electrode active material can further improve the battery characteristics.

The present invention also provide a method for manufacturing a negative electrode active material for a non-aqueous electrolyte secondary battery, the negative electrode active material comprising a negative electrode active material particle, the method comprising steps of:

producing a silicon compound particle containing a silicon compound containing oxygen;
coating at least a part of the silicon compound particle with a carbon material; and
inserting Li into the silicon compound particle to allow the silicon compound particle to contain $Li_2SiO_3$ as a Li silicate, wherein
the negative electrode active material particle is produced by these steps,
the method further comprises a step of selecting, from the negative electrode active material particle which was produced, a product satisfying:

that the $Li_2SiO_3$ is a material in which at least a part of the $Li_2SiO_3$ is to change into $Li_4SiO_4$ by charging and discharging the negative electrode active material once or more; and
that an abundance ratio of the $Li_2SiO_3$ is higher than an abundance ratio of the $Li_4SiO_4$ before charging and discharging the negative electrode active material particle and that the abundance ratio of the $Li_4SiO_4$ is higher than the abundance ratio of the $Li_2SiO_3$ after charge and discharge 100 times, and

the negative electrode active material for a non-aqueous electrolyte secondary battery comprising the negative electrode active material particle is manufactured by using the product.

The inventive method for manufacturing a negative electrode active material for a non-aqueous electrolyte secondary battery can manufacture a negative electrode active material for a non-aqueous electrolyte secondary battery that can achieve increase in the battery capacity with improvement of the initial efficiency, sufficient battery cycle characteristics, and input characteristics.

ADVANTAGEOUS EFFECTS OF INVENTION

As noted above, the inventive negative electrode active material for a non-aqueous electrolyte secondary battery can yield high initial efficiency, high capacity, high cycle characteristics, and in addition, high input-and-output characteristics (excellent high-speed charging ability) when used as a negative electrode active material of a secondary battery.

The inventive method for manufacturing a negative electrode active material for a non-aqueous electrolyte secondary battery can manufacture a negative electrode active material that yields good cycle characteristics, and in addition, has a high capacity and good initial-stage charge-and-discharge characteristics (initial efficiency), and exhibits excellent high-speed charging ability when used as a negative electrode active material of a secondary battery.

BRIEF DESCRIPTION OF DRAWING

FIG. 1 is a sectional view illustrating an example of a structure of a negative electrode for a non-aqueous electrolyte secondary battery containing the inventive negative electrode active material.
FIG. 2 is an exploded view illustrating a structure example of a (laminated film type) lithium-ion secondary battery containing the inventive negative electrode active material.
FIG. 3 is XRD charts of negative electrode active materials of each of Comparative Examples 1 and 2.
FIG. 4 is XRD charts of negative electrode active materials of each of Examples 1 and 5.
FIG. 5 is XRD charts of negative electrode active materials of each of Comparative Examples 3 and 4.
FIG. 6 is XRD charts of negative electrode active materials of each of Examples 2 to 4.
FIG. 7 is a graph indicating a change of a $^{29}$Si-MAS-NMR spectrum of a negative electrode active material of Example 2 with charge and discharge.
FIG. 8 is XPS spectra of surfaces of negative electrode active materials of each of Examples 2 and 12 and Comparative Example 1.

DESCRIPTION OF EMBODIMENTS

As described above, investigated as one method for increasing the battery capacity of the lithium-ion secondary battery is using a negative electrode using a silicon oxide as a main material as a negative electrode of the lithium-ion secondary battery. This lithium-ion secondary battery using the silicon oxide is desired to have an initial-stage charge-and-discharge characteristics approximately equivalent to those of a lithium-ion secondary battery using a carbon-based active material. A Li-doped SiO, which can improve the initial-stage charge-and-discharge characteristics, is desired to have cycle characteristics approximately equivalent to those of the carbon-base active material. However, no negative electrode active material has reached proposal to exhibit the battery characteristics equivalent to those of the carbon-based active material, specifically excellent high-speed charging ability when used as the negative electrode active material of the lithium-ion secondary battery.

The present inventors have made earnest study to obtain a negative electrode active material that can yield high cycle characteristics, improve initial-stage charge-and-discharge characteristics, consequently increase a battery capacity, and in addition, that can exhibit excellent high-speed charging ability when used as a negative electrode active material of a secondary battery. As a result, the present inventors have found that the excellent high-speed charging ability can be exhibited by a negative electrode active material containing a silicon compound particle that: mainly contains $Li_2SiO_3$ as a silicate in a slurry state; in which at least a part of $Li_2SiO_3$ is to change into $Li_4SiO_4$ with charge and discharge once or more; and in which an abundance ratio of $Li_4SiO_4$ is higher than an abundance ratio of $Li_2SiO_3$ after charge and discharge 100 times. This finding has led to complete the present invention.

Specifically, the present invention is a negative electrode active material for a non-aqueous electrolyte secondary battery, the negative electrode active material comprising a negative electrode active material particle, wherein

the negative electrode active material particle contains a silicon compound particle containing a silicon compound containing oxygen,
at least a part of a surface of the silicon compound particle is coated with a carbon layer,
the silicon compound particle contains $Li_2SiO_3$ as a Li silicate,
the $Li_2SiO_3$ is a material in which at least a part of the $Li_2SiO_3$ is to change into $Li_4SiO_4$ by charging and discharging the negative electrode active material particle once or more, and
an abundance ratio of the $Li_2SiO_3$ is higher than an abundance ratio of the $Li_4SiO_4$ before charging and discharging the negative electrode active material particle, and the abundance ratio of the $Li_4SiO_4$ is higher than the abundance ratio of the $Li_2SiO_3$ after charge and discharge at 100 times.

In addition, the present invention is a method for manufacturing a negative electrode active material for a non-aqueous electrolyte secondary battery, the negative electrode active material comprising a negative electrode active material particle, the method comprising steps of:

producing a silicon compound particle containing a silicon compound containing oxygen;

coating at least a part of the silicon compound particle with a carbon material; and

inserting Li into the silicon compound particle to allow the silicon compound particle to contain $Li_2SiO_3$ as a Li silicate, wherein

the negative electrode active material particle is produced by these steps,

the method further comprises a step of selecting, from the negative electrode active material particle which was produced, a product satisfying:

that the $Li_2SiO_3$ is a material in which at least a part of the $Li_2SiO_3$ is to change into $Li_4SiO_4$ by charging and discharging the negative electrode active material once or more; and

that an abundance ratio of the $Li_2SiO_3$ is higher than an abundance ratio of the $Li_4SiO_4$ before charging and discharging the negative electrode active material particle and that the abundance ratio of the $Li_4SiO_4$ is higher than the abundance ratio of the $Li_2SiO_3$ after charge and discharge 100 times, and

the negative electrode active material for a non-aqueous electrolyte secondary battery comprising the negative electrode active material particle is manufactured by using the product.

Hereinafter, the present invention will be described in detail, but the present invention is not limited thereto.

<Negative Electrode Active Material for Non-Aqueous Electrolyte Secondary Battery >

The inventive negative electrode active material (hereinafter, also referred to as a silicon-based negative electrode active material) contains a negative electrode active material particle (hereinafter, also referred to as a silicon-based negative electrode active material particle) containing a silicon compound particle, and thereby the battery capacity can be improved. The silicon compound particle containing $Li_2SiO_3$ as a silicate can stabilize a slurry before applying, which yields a good electrode to improve the battery characteristics.

With the inventive negative electrode active material, $Li_2SiO_3$ is a material in which at least a part of $Li_2SiO_3$ is to change to $Li_4SiO_4$ by charging and discharging the negative electrode active material particle once or more. The abundance ratio of $Li_2SiO_3$ is higher than the abundance ratio of $Li_4SiO_4$ before charging and discharging the negative electrode active material particle, and the abundance ratio of $Li_4SiO_4$ is higher than the abundance ratio of $Li_2SiO_3$ after charge and discharge 100 times. That is, $Li_2SiO_3$ contained in the silicon compound particle is active with charge and discharge, which keeps the form of $Li_2SiO_3$ in the slurry state and changes into $Li_4SiO_4$ by charge and discharge.

This can yield the effect of improving the Li diffusibility in the bulk, and the input characteristics (high-speed charging ability) required by the market can be improved.

Particularly, a type of the Li silicate is correlated with the Li diffusion in the bulk. From this viewpoint, $Li_4SiO_4$ is originally desirable, but $Li_4SiO_4$ is eluted during formation of the slurry, and thereby considered to be incompatible so far as the time of the slurry preparation. Thus, constructed is a phase structure in which $Li_2SiO_3$ is converted into $Li_4SiO_4$ with as few numbers of charge-and-discharge cycles as possible. Specifically, the mainly generated Li silicate is needed to be reversed by charge and discharge at least 100 times.

In the process of conversion (change of the silicate), $Li_4SiO_4$ is desired to exhibit reversibility in charging and discharging the negative electrode active material particle at least 10 times, that is, desired to be a component that contributes to charge and discharge by Li release.

The state of the Li silicate can be regulated by regulating a temperature in the process of inserting Li into the silicon compound particle and the subsequent heat-treating temperature. When the temperature in inserting Li is not excessively low, much Li near the particle surface can be prevented, and the sufficient composition can be obtained by the subsequent heat treatment. When the temperature in inserting Li is not excessively high, the insertion step can be stably performed. The state of the Li silicate can also be regulated by inserting Li into the silicon compound particle and then applying thermal energy thereafter, as described later.

$Li_4SiO_4$ is commonly said to be an irreversible component, and a constructed irreversible component in advance slightly decreases the improving rate of the input characteristics (high-speed charging ability). Meanwhile, further excellent high-speed charging ability can be exhibited by a material wherein the abundance ratio of $Li_2SiO_3$ and the abundance ratio of $Li_4SiO_4$ are reversed in charge and discharge 100 times and wherein $Li_4SiO_4$ exhibits reversibility with charging and discharging the negative electrode active material particle at least 10 times.

The silicon compound desirably contains no crystalline Si as much as possible. No crystalline Si contained as much as possible can prevent excessive high reactivity with the electrolyte liquid, and consequently prevent deterioration in the battery characteristics.

A crystallite size corresponding to a Si (111) crystal plane is desirably 5.0 nm or less, and Si is desirably substantially amorphous.

In this case, $Li_2SiO_3$ also exhibits crystallinity. $Li_2SiO_3$ having higher crystallinity is more difficult to be converted into $Li_4SiO_4$. Meanwhile, low crystallinity thereof causes elution to the slurry. Thus, there is an optimal range.

Specifically, the negative electrode active material particle preferably has, before charge and discharge of the negative electrode active material particle, a peak derived from the Si (111) crystal plane obtained by X-ray diffraction using Cu-K$\alpha$ ray, a size of a crystallite corresponding to the crystal plane is 5.0 nm or less, and a ratio A/B of a strength A of the peak derived from the Si (111) crystal plane to a strength B of a peak derived from a $Li_2SiO_3$ (111) crystal plane preferably satisfies the following formula (1),

$$0.4 \leq A/B \leq 1.0 \quad \cdots (1)$$

A peak derived from the Si (111) crystal plane appears $2\theta$ = near 28.4° in the X-ray diffraction chart. A peak derived from the $Li_2SiO_3$ (111) crystal plane appears within a range of $2\theta = 17°$ to 21°.

A median diameter of the negative electrode active material particle is desirably 5.5 um or more and 15 um or less.

The median diameter within the above range can sufficiently inhibit the reaction between the negative electrode active material particle and the electrolyte liquid, and prevent the deterioration in the battery characteristics. The median diameter within the above range can also inhibit expansion of the active material with charge and discharge, and prevent failure of electronic contact.

The negative electrode active material particle desirably has a true density of 2.3 $g/cm^3$ or more and 2.4 $g/cm^3$ or less before charge and discharge.

A true density of SiO is 2.2 $g/cm^3$, and a higher density thereof can increase the density of the electrode. The true density within the above appropriate range can prevent cracking during expansion and contraction. This true density can be regulated by a type and amount of the Li silicate. The state of the Li silicate can be regulated by inserting Li into the silicon compound particle and then applying thermal energy, as described later.

The active material particle before charge and discharge is needed to be coated with carbon for a purpose of imparting conductivity.

When the carbon coating is generated by pyrolysis CVD of a hydrocarbon, a structure like acetylene black is desired, although depending on the temperature. Note that, intentionally creating a compound state of O and C on a surface layer thereof can further improve the battery characteristics.

Specifically, an oxygen-containing material is used as a solvent used for Li doping to form a decompose product thereof on a material surface layer. Thereafter, a heat treatment can be performed to generate the substance similar to a coating structure generated by charge and discharge.

As a result, the battery characteristics can be improved.

[Structure of Negative Electrode]

Subsequently, the structure of the negative electrode of the non-aqueous electrolyte secondary battery containing the inventive negative electrode active material for a non-aqueous electrolyte secondary battery as described above (hereinafter, which may be simply referred to as the inventive negative electrode active material) will be described.

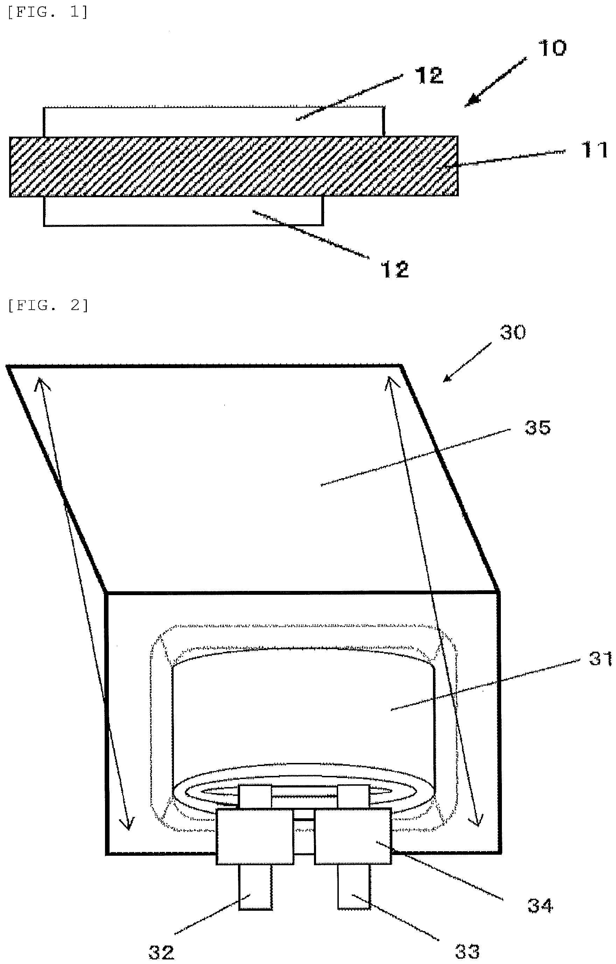

FIG. 1 illustrates a sectional view of the negative electrode containing the inventive negative electrode active material. As illustrated in FIG. 1, a negative electrode 10 has a structure having a negative electrode active material layer 12 on a negative electrode current collector 11. This negative electrode active material layer 12 may be provided on both surfaces or only one surface of the negative electrode current collector 11. As long as the inventive negative electrode active material is used, the negative electrode current collector 11 may be absent.

[Negative Electrode Current Collector]

The negative electrode current collector 11 is constituted with a material having excellent conductivity and high mechanical strength. Examples of the conductive material that can be used for the negative electrode current collector 11 include copper (Cu) and nickel (Ni). This conductive material is preferably a material that does not form an intermetallic compound with lithium (Li).

The negative electrode current collector 11 preferably contains carbon (C) or sulfur (S) in addition to the main elements. This is to improve physical strength of the negative electrode current collector. In particular, when the electrode has an active material layer to expand during charge, the current collector containing the above element has an effect of inhibiting deformation of the electrode containing the current collector. A content of the contained element is not particularly limited, but specifically preferably 100 ppm or less. This is because further higher effect of inhibiting the deformation can be obtained. Such an effect of inhibiting the deformation can further improve the cycle characteristics.

The surface of the negative electrode current collector 11 may be roughened or may not be roughened. The roughened negative electrode current collector is, for example, a metal foil having been subjected to an electrolytic treatment, emboss treatment, chemically etching treatment, etc. The non-roughed negative electrode current collector is, for example, a rolled metal foil.

[Negative Electrode Active Material Layer]

The negative electrode active material layer 12 contains the inventive negative electrode active material that is able to occlude and release lithium ions (allow lithium ions to be inserted thereinto and to be released therefrom), and from the viewpoint of battery design, may further contain other materials such as a negative electrode binder and a conductive auxiliary agent. The negative electrode active material contains the negative electrode active material particle, and the negative electrode active material particle contains the silicon compound particle containing a silicon compound containing oxygen.

The negative electrode active material layer 12 may contain a mixed negative electrode active material containing the inventive negative electrode active material (silicon-based negative electrode active material) and a carbon-based active material. This enables to decrease electric resistance of the negative electrode active material layer and to relax expansion stress with charge. As the carbon-based active material, pyrolyzed carbons, cokes, glassy carbon fibers, a sintered product of an organic polymer compound, carbon blacks, etc. can be used, for example.

As noted above, the negative electrode active material particle contained in the inventive negative electrode active material contains the silicon compound particle, and the silicon compound particle is a silicon oxide material containing a silicon compound containing oxygen. A ratio between silicon and oxygen constituting this silicon compound is preferably within a range of $SiO_x$: $0.8 \leq x \leq 1.2$. "x" of 0.8 or more, which is an increased oxygen ratio compared with the silicon simple substance, consequently yields good cycle characteristics. "x" of 1.2 or less is preferable because resistance of the silicon oxide is not excessively high. Among them, the composition of $SiO_x$ with "x" of closer to 1 is more preferable. This is because high cycle characteristics can be obtained. Should be noted that the composition of the silicon compound in the present invention does not necessarily means a purity of 100%, and may contain a slight amount of an impurity element.

In the inventive negative electrode active material, the silicon compound particle contains a Li compound. More specifically, the silicon compound particle contains $Li_2SiO_3$. In such a material, a $SiO_2$ component moiety in the silicon compound that is destabilized during insertion and release of lithium in charge and discharge of the battery is modified into another lithium silicate in advance, and thereby an irreversible capacity generated in charge can be reduced. This can particularly inhibit the decrease in the capacity at an initial stage of the cycle.

Enlarging the Li silicate within a range of inhibiting growth of Si crystals can further reduce the irreversible capacity with charge and discharge. Note that, since excessive enlarging fails to contribute to charge and discharge, there is an optimal range. Specifically, as noted above, the peak strength ratio A/B is preferably 0.4 or more and 1.0 or less.

The abundance ratios of each of $Li_4SiO_4$ and $Li_2SiO_3$ inside the bulk of the silicon compound particle can be quantified by nuclear magnetic resonance (NMR). The NMR measurement can be performed under, for example, the following condition.

$^{29}$Si-MAS-NMR (magic-angle-spinning nuclear magnetic resonance)

- Apparatus: 700 NMR spectrometer manufactured by Bruker;
- Probe: 4 mm HR-MAS rotor, 50 μL;
- Rotation speed of sample: 10 kHz;
- Temperature of measurement environment: 25°C.

The abundance ratios of $Li_4SiO_4$ and $Li_2SiO_3$ can be defined by a strength ratio of peaks (height ratio of peaks) in the NMR. In the NMR spectra obtained by the NMR, the peak of $Li_4SiO_4$ appears at a chemical shift of near -62 ppm to -72 ppm, and the peak of $Li_2SiO_3$ appears at a chemical shift of near -72 ppm to -80 ppm.

A degree of enlarging the Li silicate and a degree of crystallizing Si (for example, the crystallite size corresponding to the Si (111) crystal plane) can be determined by X-ray diffraction (XRD). The measurement by XRD can be performed under, for example, the following condition.

-XRD: D8 ADVANCE, Bruker

As the X-ray diffraction apparatus, D8 ADVANCE, manufactured by Bruker, can be used, for example.

The measurement is performed with an X-ray source of Cu Kα ray, using a Ni filter, with an output of 40 kV / 40 mA, a slit width of 0.3°, a step width of 0.008°, a counting time of 0.15 seconds per step, and within 10 to 40°.

A C-and-O compound (a compound in which a carbon atom and an oxygen atom are chemically bonded) on the outermost layer of the carbon layer coating at least a part of the surface of the negative electrode active material particle can be determined by X-ray photoelectron spectroscopy (XPS).

-XPS

As the apparatus, PHI Quantera II, manufactured by ULVAC-PHI, INCORPORATED, can be used, for example.

A beam diameter of the X-ray can be $\varphi 100$ $\mu$m, and a neutralization gun can be used.

As the negative electrode binder contained in the negative electrode active material layer 12, any one or more of a polymer material, a synthetic rubber, etc. can be used, for example. Examples of the polymer material include polyvinylidene fluoride, a polyimide, a polyamideimide, an aramid, polyacrylic acid, lithium polyacrylate, sodium polyacrylate, and carboxymethylcellulose. Examples of the synthesis rubber include styrene-butadiene-based rubber, a fluorine-based rubber, and ethylene-propylene-diene.

As the negative electrode conductive auxiliary agent, any one or more of carbon materials such as carbon black, acetylene black, graphite, Ketjenblack, carbon nanotube, and carbon nanofiber can be used, for example.

The negative electrode active material layer 12 is formed by, for example, an applying method. The applying method is a method in which the silicon-based negative electrode active material, the above binder, etc., and as necessary, the conductive auxiliary agent and the carbon-based active material are mixed, and then dispersed in an organic solvent or water and application thereof is performed.

<Method for Manufacturing Negative Electrode Active Material for Non-Aqueous Electrolyte Secondary Battery>

The inventive method for manufacturing a negative electrode active material for a non-aqueous electrolyte secondary battery is a method for manufacturing a negative electrode active material for a non-aqueous electrolyte secondary battery, the negative electrode active material comprising a negative electrode active material particle, the method comprising steps of:

producing a silicon compound particle containing a silicon compound containing oxygen;
coating at least a part of the silicon compound particle with a carbon material; and
inserting Li into the silicon compound particle to allow the silicon compound particle to contain $Li_2SiO_3$ as a Li silicate, wherein
the negative electrode active material particle is produced by these steps,
the method further comprises a step of selecting, from the negative electrode active material particle which was produced, a product satisfying:

that the $Li_2SiO_3$ is a material in which at least a part of the $Li_2SiO_3$ is to change into $Li_4SiO_4$ by charging and discharging the negative electrode active material once or more; and
that an abundance ratio of the $Li_2SiO_3$ is higher than an abundance ratio of the $Li_4SiO_4$ before charging and discharging the negative electrode active material particle and that the abundance ratio of the $Li_4SiO_4$ is higher than the abundance ratio of the $Li_2SiO_3$ after charge and discharge 100 times, and

the negative electrode active material for a non-aqueous electrolyte secondary battery comprising the negative electrode active material particle is manufactured by using the product.

Such a method for manufacturing a negative electrode active material for a non-aqueous electrolyte secondary battery can manufacture, for example, the aforementioned inventive negative electrode active material for a non-aqueous electrolyte secondary battery.

Hereinafter, an example of the inventive method for manufacturing a negative electrode active material for a non-aqueous electrolyte secondary battery will be described.

First, the silicon compound particle containing the silicon compound containing oxygen is produced.

Hereinafter, described is a case where a silicon oxide represented by $SiO_x$ ($0.5 \leq x \leq 1.6$) is used as the silicon compound containing oxygen. First, a raw material to generate a silicon oxide gas is heated in the presence of an inert gas under a reduced pressure within a temperature range of 900°C to 1600°C to generate the silicon oxide gas. In this case, a mixture of a metal silicon powder and a silicon dioxide powder can be used as the raw material, for example. With considering the presence of surface oxygen of the metal silicon powder and a slight amount of oxygen in a reaction furnace, the mixing mole ratio is desirably within a range of 0.9 < the metal silicon powder / the silicon oxide powder < 1.2.

The generated silicon oxide gas is solidified and deposited on an adsorption plate. Then, the deposited product of the silicon oxide is taken out in a state of the temperature in the reaction furnace cooled to 100°C or lower, and crushed by using a ball mill, a jet mill, etc. to form a powder. The silicon compound particle can be thus produced. The Si crystallite in the silicon compound particle can be regulated by changing the vaporizing temperature of the raw material to generate the silicon oxide gas or by a heat treatment after the generation of the silicon compound particle.

Here, a layer of a carbon material (carbon layer) is generated on a surface layer of the silicon compound particle. A method for generating the layer of the carbon material is desirably a pyrolysis CVD method. An example of the method for generating the layer of the carbon material by a pyrolysis CVD method will be described below.

First, the silicon compound particle is set in a furnace. Then, a hydrocarbon gas is introduced into the furnace, and a temperature in the furnace is raised. The decomposition temperature is not particularly limited, but desirably 950°C or lower, and more desirably 850°C or lower. The decomposition temperature of 950°C or lower can inhibit unintended disproportionation of the active material particle. After the temperature in the furnace is raised to a predetermined temperature, the carbon layer is generated on the surface of the silicon compound particle. The hydrocarbon gas to be the raw material of the carbon material is not particularly limited, but desirably a $C_nH_m$ composition wherein $n \leq 3$. When $n \leq 3$, the manufacturing cost can be reduced, and the decomposed product can have good physical properties.

Then, Li is inserted into the silicon compound particle produced as above. This step produces the negative electrode active material particle containing the lithium-inserted silicon compound particle. That is, this step modifies the silicon compound particle to generate the Li compound inside the silicon compound particle. The insertion of Li is preferably performed by a redox method.

With the modification by a redox method, first, lithium can be inserted by immersing the silicon active material particle in a solution A in which lithium is dissolved in an ether solvent, for example. This solution A may further contain a polycyclic aromatic compound or a linear polyphenylene compound. After the insertion of lithium, active lithium can be desorbed from the silicon active material particle by immersing the silicon active material particle in a solution B containing a polycyclic aromatic compound or a derivative thereof. For a solvent of the solution B, an ether solvent, a ketone solvent, an ester solvent, an alcohol solvent, an amine solvent, or a mixed solvent thereof can be used, for example. Alternatively, the silicon active material particle obtained after immersing in the solution A may be heat-treated under an inert gas. The heat treatment can stabilize the Li compound. Thereafter, the silicon active material particle may be washed by a method of washing with an alcohol, an alkaline water dissolving lithium carbonate, a weak acid, pure water, etc.

As the ether solvent used for the solution A, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, a mixed solvent thereof, etc. can be used. Among these, tetrahydrofuran, dioxane, or 1,2-dimethoxyethane is particularly preferably used. These solvents are preferably dehydrated, and preferably deoxygenated.

As the polycyclic aromatic compound contained in the solution A, one or more of naphthalene, anthracene, phenanthrene, naphthacene, pentacene, pyrene, picene, triphenylene, coronene, chrysene, and derivatives thereof can be used. As the linear polyphenylene compound, one or more of biphenyl, terphenyl, and derivatives thereof can be used.

As the polycyclic aromatic compound contained in the solution B, one or more of naphthalene, anthracene, phenanthrene, naphthacene, pentacene, pyrene, picene, triphenylene, coronene, chrysene, and derivatives thereof can be used.

As the ether solvent of the solution B, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, etc. can be used.

As the ketone solvent, acetone, acetophenone, etc. can be used.

As the ester solvent, methyl formate, methyl acetate, ethyl acetate, propyl acetate, isopropyl acetate, etc. can be used.

As the alcohol solvent, methanol, ethanol, propanol, isopropyl alcohol, etc. can be used.

As the amine solvent, methylamine, ethylamine, ethylenediamine, etc. can be used.

The generated Li silicate is $Li_4SiO_4$, and it is difficult to form the battery because $Li_4SiO_4$ as is causes elution during formation of the slurry. Thus, a heat treatment is performed to convert $Li_4SiO_4$ into $Li_2SiO_3$, and a temperature at this time changes degrees of crystallization of the Li silicate and Si.

In addition, the reaction temperature during the Li insertion is also involved.

Specifically, inserting Li at a temperature near a boiling point of the used solvent develops the crystallinity of Si in the next step of the heat treatment in spite of the crystallinity of the Li silicate being not so high, which indicates importance of a balance between the heat treatment and the Li-inserting step. Therefore, the reaction temperature during the Li insertion can be determined depending on, for example, the boiling point of the used solvent.

The reactivity becomes low also with an excessively low temperature during the Li insertion. The considerably lowered reactivity can be prevented by setting the temperature to be at least 50°C or higher. This can prevent increase in a Li concentration in the particle surface layer, and can also prevent proceeding of disproportionation of the surface layer part in the next step of the heat treatment.

The C-and-O compound in the outermost layer of the carbon layer coating a part of the surface of the silicon compound particle can be generated from a substance not containing oxygen and being to form a complex with Li, such as biphenyl being the linear polyphenylene compound, by introducing O from the outside, for example.

Thus, O contained in the solvent A is preferably used. When releasing Li, the complex is desirably decomposed together with the solvent.

Note that, since the generated compound itself is unstable, and a stabilized layer is needed to be formed by the heat treatment with partial decomposition. This stabilized layer is called as a pseudo solid electrolyte interface (SEI) coating, and formation of this stabilized layer enables to smoothly release and receive Li when used as the battery.

The state of the Li silicate can be regulated by heat-treating the material having been subjected to Li-doping by the redox method at, for example, 500°C or higher and 650°C or lower over 1 to 24 hours, after the filtration.

In this case, it is important to perform the heat treatment in a vacuum state or under an inert gas.

The heat-treating apparatus is not limited herein, but a uniform heat treatment such as a rotary kiln is desirably used.

In this case, regulating the vacuum state, a flow rate of the inert gas (internal pressure), a retort thickness, and a number of rotation as factors can create various state of the Li silicate.

Similarly, the heat treatment with regulating the above factors can regulate enlarging silicon or forming amorphous of silicon.

Inserting Li into the silicon compound particle and applying thermal energy change the Li silicate into the other type as noted above, which can form a denser state in this time. This can regulate the state of the Li silicate and can regulate the true density of the negative electrode active material particle before charge and discharge.

The negative electrode active material particle can be produced by the above Li insertion and the heat treatment thereafter.

The state of the Li silicate can be regulated by adjusting various parameters as above, and those skilled in the art can experimentally determine the condition.

Then, from the produced negative electrode active material, selected is $Li_2SiO_3$ satisfying: that at least a part of $Li_2SiO_3$ is to change to $Li_4SiO_4$ by charging and discharging the negative electrode active material particle once or more; and that an abundance ratio of $Li_2SiO_3$ is higher than an abundance ratio of $Li_4SiO_4$ before charging and discharging the negative electrode active material particle, and the abundance ratio of $Li_4SiO_4$ is higher than the abundance ratio of $Li_2SiO_3$ after charge and discharge 100 times. For the selection, for example, a battery for test similar to a coin battery for test, described in the following Examples, is produced by using the produced negative electrode active material, this coin battery for test is evaluated, and the selection can be performed based on the evaluation results.

The inventive negative electrode active material for a non-aqueous electrolyte secondary battery is manufactured by the above method.

<Method for Producing Negative Electrode>

By using the inventive negative electrode active material, a negative electrode for a non-aqueous electrolyte secondary battery can be produced by, for example, the following procedure.

The negative electrode active material produced as above is mixed with other materials such as the negative electrode binder and the conductive auxiliary agent to form a negative electrode mixture, and then an organic solvent, water, etc. is added to form a slurry. Then, the above slurry is applied on a surface of the negative electrode current collector and dried to form the negative electrode active material layer. In this time, heat-pressing may be performed as necessary. The negative electrode can thus be produced.

<Lithium-Ion Secondary Battery>

The inventive negative electrode active material can be used for a negative electrode of a non-aqueous electrolyte secondary battery, for example, a lithium-ion secondary battery.

Next, as a specific example of the non-aqueous electrolyte secondary battery that can use the inventive negative electrode active material, an example of a laminated-film-type lithium-ion secondary battery will be described.

[Structure of Laminated-Film-Type Secondary Battery]

A laminated-film-type lithium-ion secondary battery 30 illustrated in FIG. 2 mainly has a structure in which a wound electrode assembly 31 is housed inside an exterior member 35 mainly having a sheet shape. This wound electrode assembly 31 has a separator between a positive electrode and a negative electrode, and has a wound structure thereof. There is a case where a non-wound stacked product having a separator between a positive electrode and a negative electrode is housed. In any of the electrode assemblies, a positive electrode lead 32 is attached to the positive electrode, and a negative electrode lead 33 is attached to the negative electrode. The outermost peripheral part of the electrode assembly is protected with a protective tape.

The positive electrode lead 32 and the negative electrode lead 33 are drawn in one direction from an inside of the exterior member 35 toward an outside, for example. The positive electrode lead 32 is formed of a conductive material such as, for example, aluminum. The negative electrode lead 33 is formed of a conductive material such as, for example, nickel and copper.

The exterior member 35 is, for example, a laminated film in which a fusing layer, a metal layer, and a surface-protecting layer are stacked in this order. Two of this laminated film are bonded to each other by fusing each of the outer peripheral portions of the fusing layers thereof or by adhesive agent so that the fusing layer of the laminated film is opposite to the electrode assembly 31. The fusing part is, for example, a film of polyethylene, polypropylene, etc., and the metal part is aluminum foil, etc. The protective layer is made of, for example, nylon.

Between the exterior member 35 and each of the positive electrode lead 32 and the negative electrode lead 33, adhesive films 34 are inserted to prevent entering of external air. This material is, for example, polyethylene, polypropylene, or a polyolefin resin.

Hereinafter, each member will be described.

[Positive Electrode]

The positive electrode has, similar to the negative electrode 10 in FIG. 1, a positive electrode active material layer on both surfaces or one surface of a positive electrode current collector, for example.

The positive electrode current collector is formed with a conductive material such as, for example, aluminum.

The positive electrode active material layer contains any one or two or more positive electrode materials that is able to occlude and release lithium ions, and may contain other materials such as a positive electrode binder, a positive electrode conductive auxiliary agent, and a dispersing agent, according to the design. In this case, details about the positive electrode binder and the positive electrode conductive auxiliary agent are same as of, for example, the negative electrode binder and the negative electrode conductive auxiliary, which have been described.

The positive electrode material is desirably a lithium-containing compound. Examples of this lithium-containing compound include: a composite oxide composed of lithium and a transition metal element; or a phosphate compound having lithium and a transition metal element. Among these positive electrode materials, a compound containing at least one or more of nickel, iron, manganese, and cobalt is preferable. These materials are represented as a chemical formula of, for example, $Li_xM_1O_2$ or $Li_yM_2PO_4$. In the formulae, $M_1$ and $M_2$ represent at least one or more transition metal elements. The values of "x" and "y", which indicate different values depending on a state of charge and discharge of the battery, are typically represented by $0.05 \leq x \leq 1.10$ and $0.05 \leq y \leq 1.10$.

Examples of the composite oxide having lithium and a transition metal element include lithium-cobalt composite oxide ($Li_xCoO_2$), lithium-nickel composite oxide ($Li_xNiO_2$), and lithium-nickel-cobalt composite oxides. Examples of the lithium-nickel-cobalt composite oxide include lithium-nickel-cobalt-aluminum composite oxide (NCA) and lithium-nickel-cobalt-manganese composite oxide (NCM).

Examples of the phosphate compound having lithium and a transition metal element include lithium iron phos-phate compound ($LiFePO_4$) or lithium iron manganese phosphate compound ($LiFe_{1-u}Mn_uPO_4$ $(0 < u < 1)$). Using these positive electrode materials can yield the high battery capacity and can yield the excellent cycle characteristics.

[Negative Electrode]

The negative electrode has a structure similar to that of the aforementioned negative electrode 10 for a lithium-ion secondary battery in FIG. 1, and has, for example, negative electrode active material layers 12 on both surfaces of the negative electrode current collector 11. This negative electrode preferably has a larger negative electrode charge capacity than an electric capacity (charge capacity as a battery) obtained with the positive electrode active material agent. This can inhibit precipitation of lithium metal on the negative electrode.

The positive electrode active material layers are provided on a part of both the surfaces of the positive electrode current collector, and the negative electrode active material layers are also similarly provided on a part of both the surfaces of the negative electrode current collector. In this case, provided is, for example, a region where the positive electrode active material layer opposite to the negative electrode active material layer provided on the negative electrode current collector is absent. This is to achieve a stable battery design.

In the above region where the negative electrode active material layer and the positive electrode active material layer are not opposite to each other, there is almost no effect by charge and discharge. Thus, the state of the negative electrode active material layer is maintained as that immediately after the formation, which enables to accurately determine the composition of the negative electrode active material, etc. with good reproducibility regardless of charge and discharge or not.

[Separator]

The separator separates lithium metal or the positive electrode from the negative electrode, and allows lithium ions to permeate with preventing a current short circuit due to contacting both the electrodes. This separator is formed with a porous film composed of, for example, a synthetic resin or ceramic, and may have a stacked structure in which two or more types of porous films are stacked. Examples of the synthetic resin include polytetrafluoroethylene, polypropylene, and polyethylene.

[Electrolyte Liquid]

At least a part of the active material layer or the separator is impregnated with a liquid non-aqueous electrolyte (electrolyte liquid). This electrolyte liquid dissolves an electrolyte salt in a solvent, and may contain other materials such as an additive.

As the solvent, a non-aqueous solvent can be used, for example. Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, at least one or more of ethylene carbonate, propylene carbonate, dimethyl carbonate, diethyl carbonate, and ethyl methyl carbonate are desirably used. This is because better characteristics can be obtained. In this case, combination of: a high-viscosity solvent, such as ethylene carbonate and propylene carbonate; and a low-viscosity solvent, such as dimethyl carbonate, ethyl methyl carbonate, and diethyl carbonate can yield more advantageous characteristics. This is because dissociating ability for the electrolyte salt and ion mobility are improved.

When an alloy-type negative electrode is used, the solvent particularly desirably contains at least one of a halogenated chain carbonate ester or a halogenated cyclic carbonate ester. This forms a stable coating on the negative electrode active material surface during charge and discharge, particularly during charge. Here, the halogenated chain carbonate ester refers to a chain carbonate ester having a halogen as a constitution element (at least one hydrogen is substituted with a halogen). The halogenated cyclic carbonate ester refers to a cyclic carbonate ester having a halogen as a constitution element (that is, at least one hydrogen is substituted with a halogen).

A type of the halogen is not particularly limited, but fluorine is preferable. This is because fluorine forms a coating with good quality compared with other halogens. It is preferable that the number of the halogen be high. This is because the obtained coating becomes more stable, and a decomposition reaction of the electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-one and 4,5-difluoro-1,3-dioxolan-2-one.

As the additive for the solvent, an unsaturated carbon-bond cyclic carbonate ester is preferably contained. This is because a stable coating is formed on the negative electrode surface during charge and discharge, and the decomposition reaction of the electrolyte liquid can be inhibited. Examples of the unsaturated carbon-bond cyclic carbonate ester include vinylene carbonate and vinylethylene carbonate.

As the additive for the solvent, a sultone (cyclic sulfonate ester) is preferably contained. This is because chemical stability of the battery is improved. Examples of the sultone include propanesultone and propenesultone.

The solvent preferably further contains an acid anhydride. This is because chemical stability of the electrolyte liquid is improved. Examples of the acid anhydride include propanedisulfonic anhydride.

The electrolyte salt can contain, for example, any one or more of light metal salts, such as a lithium salt. Examples of the lithium salt include lithium hexafluorophosphate ($LiPF_6$) and lithium tetrafluoroborate ($LiBF_4$).

A content of the electrolyte salt is preferably 0.5 mol/kg or more and 2.5 mol/kg or less relative to the solvent. This is because high ion conductivity can be obtained.

[Method for Manufacturing Laminated-Film-Type Secondary Battery]

The laminated-film-type secondary battery described above can be manufactured according to, for example, the following procedure.

At first, a positive electrode is produced by using the above positive electrode material. First, the positive electrode active material, and as necessary, the positive electrode binder, the positive electrode conductive auxiliary agent, etc. are mixed to form a positive electrode mixture, and dispersed in an organic solvent to form a positive electrode mixture slurry. Subsequently, the mixture slurry is applied on the positive electrode current collector with a coating apparatus, such as a knife roller or a die coater having a die head, and dried with hot air to obtain the positive electrode active material layer. Finally, the positive electrode active material layer is compressed and molded with a roll-pressing machine, etc. At this time, heating may be performed, and the compression may be repeated a plurality of times.

Then, according to the operation procedure similar to the production of the negative electrode 10 described above, the negative electrode active material layer is formed on the negative electrode current collector to produce the negative electrode.

When the positive electrode and the negative electrode are produced, each of the active material layers is formed on both the surfaces of the positive and negative electrode current collectors, respectively. At this time, in both the electrodes, applied active material lengths on both the surfaces may differ from one another (see FIG. 1).

Subsequently, the electrolyte liquid is prepared. Subsequently, by ultrasonic welding, etc., the positive electrode lead 32 is attached to the positive electrode current collector, and the negative electrode lead 33 is attached to the negative electrode current collector. Subsequently, the positive electrode and the negative electrode are stacked via the separator, and then wound to produce the wound electrode assembly 31. To the outermost peripheral part thereof, a protective tape is bonded. Then, the wound electrode assembly 31 is molded so as to have a flat shape. Subsequently, the wound electrode assembly 31 is sandwiched between the exterior member 35 with a folded film shape, then insulating parts of the exterior member are bonded to each other by a thermal fusing method, and the wound electrode assembly 31 is enclosed in a released state in only one direction. Subsequently, the adhesive films are inserted between: the positive electrode lead 32 and the negative electrode lead 33; and the exterior member 35. Subsequently, a predetermined amount of the electrolyte liquid prepared as above is poured through the released part and vacuum impregnation is performed. After the impregnation, the released part is bonded by a vacuum thermal fusing method. Thus, the laminated-film-type secondary battery 30 can be manufactured.

The non-aqueous electrolyte secondary battery, such as the laminated-film-type secondary battery 30 produced above, preferably has a utilization rate of the negative electrode during charge and discharge of 93% or more and 99% or less. When the utilizing rate of the negative electrode is within a range of 93% or more, the initial charge efficiency is not decreased, and the battery capacity can be remarkably improved. When the utilizing rate of the negative electrode is within a range of 99% or less, Li is not precipitated to achieve safety.

EXAMPLES

Hereinafter, the present invention will be more specifically described with showing Examples of the present invention and Comparative Examples, but the present invention is not limited to these Examples.

[Manufacture of Negative Electrode Active Material]

(Examples 1 to 5 and Comparative Examples 3 and 4)

In each of Examples 1 to 5 and Comparative Examples 3 and 4, a negative electrode active material (negative electrode active material particle) was firstly produced as follows. A metal silicon powder and a silicon dioxide were mixed to obtain a raw material. This raw material was introduced to a reaction furnace and the material was vaporized in an atmosphere at a degree of vacuum of 10 Pa and deposited on an adsorption plate, and the deposited product was sufficiently cooled. Then, the deposited product was taken out and crushed with a ball mill. A silicon compound particle thus obtained had a value of "x" in $SiO_x$ of 1.0. Subsequently, a particle diameter of the silicon compound particle was regulated by classification.

Thereafter, pyrolysis CVD was performed within a range of 700°C to 950°C to coat a surface of the silicon compound particle with a carbon layer.

Subsequently, using an ether solvent with a reduced moisture to 50 ppm, lithium was inserted into the silicon compound particle by a redox method within a range of 50°C to 150°C for modification.

Thereafter, the lithium-inserted silicon compound particle was transferred to a rotary kiln, a vacuum was created in the rotary kiln, and the lithium-inserted silicon compound particle was heated therein within a range of 450°C to 700°C for 12 hours for modification. Thus, the negative electrode active material in each Example was obtained.

Should be noted that in Examples 1 to 5 and Comparative Examples 3 and 4, the temperature during the lithium insertion and the temperature condition of the heat treatment after the lithium insertion were varied according to those as shown below.

(Comparative Examples 1 and 2)

LiH and SiO/C were mixed, and a heat treatment was performed at 750°C (Comparative Example 1) or 680°C (Comparative Example 2). Thus, the negative electrode active materials of Comparative Examples 1 and 2 were obtained. A condition at 650°C or lower was tried but failed to reach an evaluation due to coagulation during formation of a slurry described below.

(Comparative Example 3)

In Comparative Example 3, the ether solvent was used to insert Li into the silicon compound particle coated with the carbon layer, as described above. At this time, the insertion was performed at a reaction temperature within a range from a boiling point of the solvent to - 5°C. After the Li insertion, the heat treatment was performed at 650°C or higher.

(Comparative Example 4)

In Comparative Example 4, Li was inserted as in Comparative Example 3, and the heat treatment was performed at 680°C or higher.

(Examples 1 to 5)

In Examples 1 to 5, the ether solvent was used to insert Li into the silicon compound particle coated with the carbon layer at a temperature 10°C or more lower than the boiling point of the solvent, as described above. After the Li insertion, crystallinity of the Li silicate and Si were regulated by changing the heat-treating temperature within a range of 500°C or higher and 650°C or lower. As a result, the negative electrode active material particles obtained in Examples 1 to 5 had a crystallite size corresponding the Si (111) crystal plane of values shown in the following Table 1.

(Examples 6 to 11)

In the Examples 6 to 11, a negative electrode active material was manufactured in the same manner as in Example 2 except that the particle diameter of the silicon compound particles is adjusted by classification so that the median diameter of the negative electrode active material particles to be manufactured was values shown in the following Table 1.

(Example 12)

In Example 12, a negative electrode active material was manufactured in the same manner as in Example 2 except that hydrogen gas was introduced during the heat treatment after the Li insertion for a purpose of removing the O-and-C compound on the outermost layer.

[Production of Negative Electrode]

Then, the produced negative electrode active material (oxygen-containing silicon compound) particle, graphite, a conductive auxiliary agent 1 (carbon nanotube, CNT), a conductive auxiliary agent 2 (carbon fine particles having a median diameter of approximately 50 nm), sodium polyacrylate, and carboxymethylcellulose (hereinafter, referred to as CMC) were mixed at a dry mass ratio of 9.3 : 83.7 : 1 : 1 : 4 : 1, and then the mixture was diluted with pure water to form a negative electrode mixture slurry.

As a negative electrode current collector, electrolytic copper foil with 15 um in thickness was used. This electrolytic copper foil contained carbon and sulfur at each concentration of 70 mass-ppm. Finally, the negative electrode mixture slurry was applied on the negative electrode current collector, and dried in a vacuum atmosphere at 100°C $\times$ 1 hour. An amount of the stacked negative electrode active material layer per unit area (also referred to as an area density) on one surface of the negative electrode after drying was 7.0 mg/cm$^2$. Thus, a negative electrode of each Example was obtained.

[Assembly of Coin Battery for Test]

Then, ethylene carbonate (EC) and dimethyl carbonate (DMC) were mixed to prepare a non-aqueous solvent, and then an electrolyte salt (lithium hexafluorophosphate: LiPF$_6$) was dissolved into this non-aqueous solvent to prepare an electrolyte liquid (non-aqueous electrolyte). In this case, the composition of the solvent was EC : DMC = 30 : 70 in a volume ratio, and a content of the electrolyte salt was 1 mol/kg relative to the solvent. As an additive, fluoroethylene carbonate (FEC) was added at 2.0 wt%.

Then, a coin battery for an initial efficiency test was assembled as follows.

First, Li foil with 1 mm in thickness was punched to a diameter of 16 mm, and pasted onto an aluminum clad.

Then, the negative electrode obtained above was punched to a diameter of 15 mm, and disposed oppositely to the Li foil pasted onto the aluminum clad via a separator, the electrolyte liquid was injected, and then a 2032 coin battery was fabricated.

[Measurement of Initial Efficiency]

The initial efficiency was measured under the following condition.

First, the fabricated coin battery for an initial efficiency test was charged (initial charge) at a charge rate corresponding to 0.03 C with a CCCV mode. The CV was set to 0 V, and the termination current was 0.04 mA. Then, the coin battery was CC-discharged (initial discharge) at a discharge rate of 0.03 C, same as above, with the discharge termination voltage of 1.2 V.

When initial-stage charge-discharge characteristics were determined, the initial efficiency (hereinafter, which may be referred to as an initial efficiency) was calculated. The initial efficiency was calculated by the formula represented by Initial

$$\text{Efficiency (\%)} = (\text{Initial Discharge Capacity} / \text{Initial Charge Capacity}) \times 100$$

[Manufacture and Battery Evaluation of Lithium Secondary Battery]

From the obtained initial-stage data, a counter positive electrode was designed so that a utilizing rate of the negative electrode was 95%. The utilizing rate was calculated based on the following formula from the capacities of the positive and negative electrodes obtained with the Li counter electrode.

$$\text{Utilizing Rate} = (\text{Positive Electrode Capacity} - \text{Negative Electrode Loss}) / (\text{Negative Electrode Capacity} - \text{Negative Electrode Loss}) \times 100$$

Based on this design, each of lithium secondary batteries of Examples and Comparative Examples was manufactured. The battery evaluation was performed on each of the lithium secondary batteries of Examples and Comparative Examples.

The cycle characteristics were determined as follows. First, the battery was charged and discharged at 0.2 C with two cycles under an environment at 25°C for stabilizing the battery, and a discharge capacity at the 2nd cycle was measured. The battery cycle characteristics were calculated from a discharge capacity at the 3rd cycle, and the battery test was finished at the 100th cycle. The battery was charged at 0.7 C and discharged at 0.5 C. The charge voltage was 4.3 V, the discharge termination voltage was 2.5 V, and the charge termination rate was 0.07 C.

The input characteristics (high-speed charging ability) were evaluated by observing Li precipitation behavior during charge at 2 C by disassembling the battery. The charge at 2 C was performed after charge and discharge 10 times under the same condition as the charge-and-discharge condition of the cycle characteristics test.

The change of the silicate in the negative electrode active material particle from the particle before charge and discharge was observed by NMR. Disassembled and analyzed by NMR were: a battery before charge and discharge; and each of batteries after the 1st full-charge, after the 1st discharge at 2.0 V, after the 10th full-charge, after the 1st discharge at 2.0 V, after the 100th full-charge, and after the 100th discharge at 2.0 V. When a battery had an abundance ratio of $Li_4SiO_4$ lower than an abundance ratio of $Li_2SiO_3$ even after the 100 cycles, the change was observed by disassembling and analyzing the battery at each 50 cycles after the 100th cycle until the 300th cycle.

[Median Diameter and True Density of Negative Electrode Active Material Particle]

A median diameter and true density of each negative electrode active material particle were measured. The following Table 1 summarizes the results.

[XRD Analysis of Negative Electrode Active Material Particle]

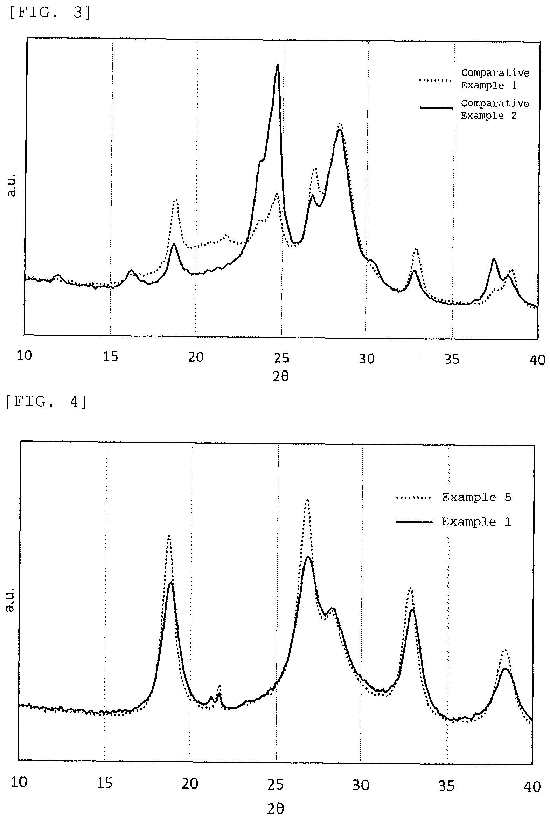

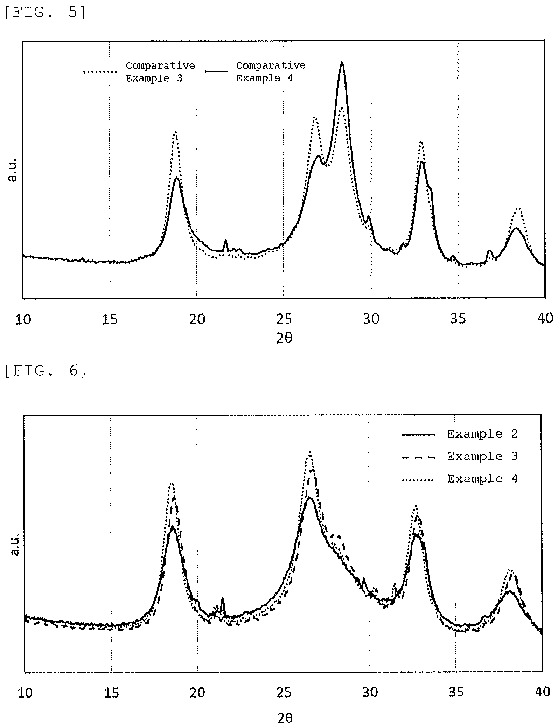

Each negative electrode active material particle was analyzed by XRD. FIG. 3 to FIG. 6 show each of the results. The negative electrode active material particles of Comparative Examples 1 to 4 had a ratio A/B of more than 1, the rate A/B being of a strength A of a peak (appeared near $2\theta = 28.4°$) derived from the Si (111) crystal plane to a strength B of a peak (appeared within a range of $2\theta = 17°$ to 21°) derived from the $Li_2SiO_3$ (111) crystal plane. Meanwhile, in Examples 1 to 12, the ratio A/B was 0.4 or more and 1.0 or less.

A crystallite size corresponding to the Si (111) crystal plane was calculated from the peak derived from the Si (111) crystal plane based on the Scherrer's formula. In the negative electrode active material particles of Examples 2 and 6 to 12, Si was in amorphous state.

The following Table 1 summarizes the peak strength ratio A/B and crystallite size corresponding to the Si (111) crystal plane of each Example.

[XPS Analysis of Surface of Negative Electrode Active Material Particle]

The surface of each negative electrode active material particle was analyzed by XPS, and whether a compound in which a carbon atom and an oxygen atom were chemically bonded was present or not on the outermost surface of the carbon layer. The following Table 1 summarizes the results.

[Table 1]

| | Capacity retention ratio until 100 Cy (%) | Initial efficiency (%) | Li precipitation during charge at 2C | Particle diameter ($\mu$m) | True density ($g/cm^3$) | Number of charge and discharge until abundance ratio of $Li_4SiO_4$ exceeds abundance ratio of $Li_2SiO_3$ | Peak strength ratio between Si (111) and $Li_2SiO_3$ (111) A/B | Compound of outermost surface of C layer | Crystallite size corresponding to Si (111) crystal plane |
|---|---|---|---|---|---|---|---|---|---|
| Comp. Ex. 1 | 87 | 81.0 | Precipitated | 6.5 | 2.26 | Not converted | 1.38 | C | 7.5 nm |
| Comp. Ex. 2 | 86 | 83.0 | Precipitated | 6.5 | 2.27 | 200 to 250 | 1.52 | C | 7 nm |
| Comp. Ex. 3 | 89 | 90.5 | Precipitated | 6.5 | 2.29 | more than 100 and within 150 | 1.02 | C, O | 5 nm |
| Comp. Ex. 4 | 92 | 90.2 | Precipitated | 6.5 | 2.31 | Not converted | 1.67 | C, O | 9.2 nm |
| Ex. 1 | 92.8 | 90.2 | Not precipitated | 6.5 | 2.35 | within 100 | 0.71 | C, O | 3.8 nm |
| Ex. 2 | 94.1 | 90.1 | Not precipitated | 6.5 | 2.34 | within 100 | 0.55 | C, O | Amorphous |
| Ex. 3 | 93.2 | 90.3 | Not precipitated | 6.5 | 2.35 | within 100 | 0.67 | C, O | 2.2 nm |
| Ex. 4 | 93.5 | 90.2 | Not precipitated | 6.5 | 2.34 | within 100 | 0.56 | C, O | 1.1 nm |
| Ex. 5 | 92.6 | 90.2 | Not precipitated | 6.5 | 2.33 | within 100 | 0.66 | C, O | 4.0 nm |
| Ex. 6 | 92.5 | 90.1 | Not precipitated | 4 | 2.34 | within 100 | 0.55 | C, O | Amorphous |
| Ex. 7 | 93.5 | 90.2 | Not precipitated | 5.5 | 2.34 | within 100 | 0.55 | C, O | Amorphous |
| Ex. 8 | 94.2 | 90.2 | Not precipitated | 9 | 2.35 | within 100 | 0.55 | C, O | Amorphous |
| Ex. 9 | 94.3 | 90.1 | Not precipitated | 12 | 2.34 | within 100 | 0.55 | C, O | Amorphous |

(continued)

| | Capacity retention ratio until 100 Cy (%) | Initial efficiency (%) | Li precipitation during charge at 2C | Particle diameter (μm) | True density (g/cm³) | Number of charge and discharge until abundance ratio of $Li_4SiO_4$ exceeds abundance ratio of $Li_2SiO_3$ | Peak strength ratio between Si (111) and $Li_2SiO_3$ (111) A/B | Compound of outermost surface of C layer | Crystallite size corresponding to Si (111) crystal plane |
|---|---|---|---|---|---|---|---|---|---|
| Ex. 10 | 93.7 | 90.2 | Not precipitated | 15 | 2.35 | within 100 | 0.55 | C, O | Amorphous |
| Ex. 11 | 92.3 | 89.9 | Not precipitated | 17 | 2.35 | within 100 | 0.55 | C, O | Amorphous |
| Ex. 12 | 92.3 | 90.1 | Not precipitated | 6.5 | 2.34 | within 100 | 0.55 | C | Amorphous |

It was obvious from the Table 1 that, with the lithium-ion secondary batteries of Examples 1 to 12, no Li precipitation was observed even during the charge at 2 C. Meanwhile, with the lithium-ion secondary batteries of Comparative Examples 1 to 4, Li precipitation was observed due to the charge at 2 C. From the results, it has been found that the lithium-ion secondary batteries of Examples 1 to 12 can exhibit more excellent high-speed charging ability than the lithium-ion secondary batteries of Comparative Examples 1 to 4.

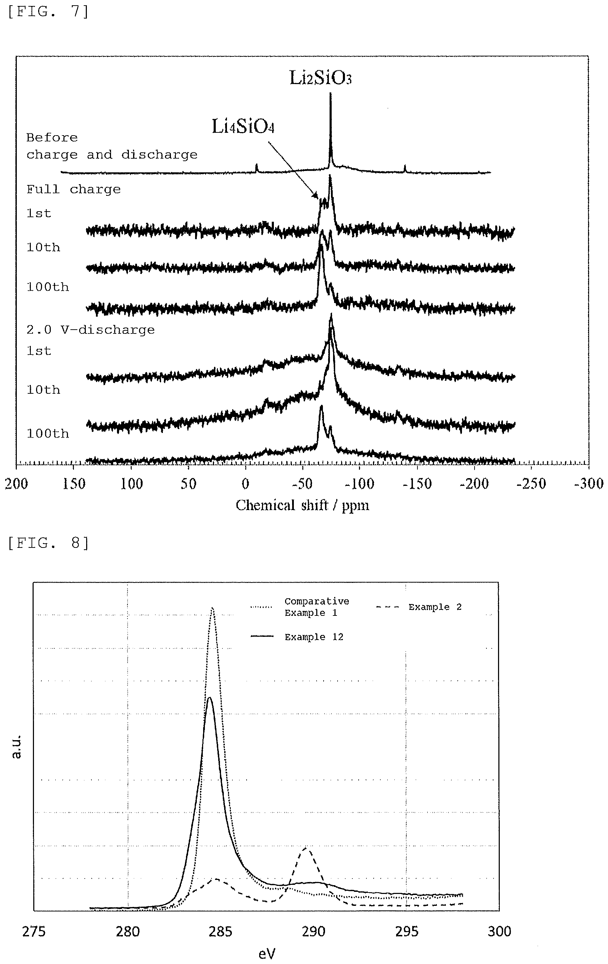

FIG. 7 shows the change in $^{29}$Si-MAS-NMR spectrum (change in the Li silicate) with charge and discharge of the negative electrode active material of Example 2. It was obvious from FIG. 7 that the negative electrode active material of Example 2 had the abundance ratio of $Li_2SiO_3$ higher than the abundance ratio of $Li_4SiO_4$ before charging and discharging the negative electrode active material particle, and the abundance ratio of $Li_4SiO_4$ higher than the abundance ratio of $Li_2SiO_3$ after charge and discharge at 100 times. Similarly, the negative electrode active materials of Examples 1 and 3 to 12 had the abundance ratio of $Li_2SiO_3$ higher than the abundance ratio of $Li_4SiO_4$ before charging and discharging the negative electrode active material particle. As shown in Table 1, the negative electrode active materials of Examples 1 and 3 to 12 similarly had the abundance ratio of $Li_4SiO_4$ higher than the abundance ratio of $Li_2SiO_3$ after charge and discharge at 100 times.

As above, the conversion of the Li silicate after charge and discharge at 100 times is observed, and it has been found that Li precipitation during high-speed charge can be inhibited in all the Examples 1 to 12. That is, in Examples 1 to 12, $Li_2SiO_3$ was dominant with uncharged, but a part thereof was converted into $Li_4SiO_4$ with charge and discharge, and $Li_4SiO_4$ was dominant after the 100 cycles. Such an easily changeable Li silicate, which had good Li diffusibility in the bulk, achieved inhibition of Li precipitation during high-speed charge. This is considered to be a reason why the negative electrode active materials of Examples 1 to 12 exhibit excellent high-speed charging ability.

Meanwhile, the Li silicate generated in Comparative Example 1 did not change with charge and discharge within a range until the 300 cycles. The Li silicate generated in Comparative Example 2 also did not change with charge and discharge within a range until the 200 cycles.

It was confirmed that, with the negative electrode active material particle of Comparative Example 3, the heat treatment at 650°C or higher after the Li insertion consequently proceeded crystallization of Si, and caused $Li_2SiO_3$ to be difficult to change with charge and discharge.

It was confirmed that, with the negative electrode active material particle of Comparative Example 4, the heat treatment at 680°C or higher caused $Li_2SiO_3$ not to change with charge and discharge.

It is considered that the negative electrode active materials of Comparative Examples 1 to 4 did not contain an easily changeable Li silicate as described above, thereby had poor Li diffusibility in the bulk, and consequently failed to inhibit the Li precipitation during the high-speed charge.

From the results of the cycle characteristics of Examples 1 to 5, it has been revealed that the crystallinity of Si is desirably substantially amorphous.

From the results of Examples 1 to 5 and Comparative Examples 3 and 4, it is found that the aforementioned easiness of the change of the Li silicate and crystallization of Si, estimated by XRD, are important as control parameters, which significantly vary depending on the condition of Li insertion and the heat-treating condition.

It is obvious from Table 1 that the negative electrode active materials of Examples 1 to 12 have achieved more excellent cycle characteristics than the negative electrode active materials of Comparative Examples 1 to 4, and more excellent initial efficiency than Comparative Examples 1 and 2.

Specifically, it was found from the results of Examples 2 and 6 to 11 that changing the particle diameter to be smaller reduced the reaction area to remarkably improve the cycle characteristics of the battery.

Example 2 exhibited more excellent cycle characteristics than Example 12. Example 12 is an example where the O-and-C compound on the outermost layer was removed, as described above.

FIG. 8 shows XPS spectra of the negative electrode active materials surfaces of each of Example 2, Example 12, and Comparative Example 1.

It was obvious from FIG. 8 that the peak near 289.5 eV in the spectrum of Example 12 was smaller than the peak of Example 2. From comparison between the cycle characteristics of Example 2 and Example 12, it is found that the presence of the C-and-O compound having a structure similar to SEI on the outermost surface of the carbon layer can achieve more excellent battery characteristics. Note that, in the negative electrode active materials of Comparative Examples 1 and 2, the C-and-O compound was absent on the outermost surface of the carbon layer.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

**Claims**

1. A negative electrode active material for a non-aqueous electrolyte secondary battery, the negative electrode active material comprising a negative electrode active material particle, wherein

   the negative electrode active material particle contains a silicon compound particle containing a silicon compound containing oxygen,
   at least a part of a surface of the silicon compound particle is coated with a carbon layer,
   the silicon compound particle contains $Li_2SiO_3$ as a Li silicate,
   the $Li_2SiO_3$ is a material in which at least a part of the $Li_2SiO_3$ is to change into $Li_4SiO_4$ by charging and discharging the negative electrode active material particle once or more, and
   an abundance ratio of the $Li_2SiO_3$ is higher than an abundance ratio of the $Li_4SiO_4$ before charging and discharging the negative electrode active material particle, and the abundance ratio of the $Li_4SiO_4$ is higher than the abundance ratio of the $Li_2SiO_3$ after charge and discharge at 100 times.

2. The negative electrode active material for a non-aqueous electrolyte secondary battery according to claim 1, wherein the $Li_4SiO_4$ is a reversible component that contributes to charge and discharge during charge and discharge of the negative electrode active material particle at least 10 times.

3. The negative electrode active material for a non-aqueous electrolyte secondary battery according to claim 1 or 2, wherein the negative electrode active material particle has, before charge and discharge of the negative electrode active material particle, a peak derived from a Si (111) crystal plane obtained by X-ray diffraction using Cu-K$\alpha$ ray, a size of a crystallite corresponding to the crystal plane is 5.0 nm or less, and a ratio A/B of a strength A of the peak derived from the Si (111) crystal plane to a strength B of a peak derived from a $Li_2SiO_3$ (111) crystal plane satisfies the following formula (1),

$$0.4 \leq A/B \leq 1.0 \quad \cdots (1)$$

4. The negative electrode active material for a non-aqueous electrolyte secondary battery according to any one of claims 1 to 3, wherein the negative electrode active material particle has a median diameter of 5.5 um or more and 15 um or less.

5. The negative electrode active material for a non-aqueous electrolyte secondary battery according to any one of claims 1 to 4, wherein the negative electrode active material particle has a true density of 2.3 g/cm$^3$ or more and 2.4 g/cm$^3$ or less before charge and discharge.

6. The negative electrode active material for a non-aqueous electrolyte secondary battery according to any one of claims 1 to 5, wherein the negative electrode active material particle has an oxygen-containing carbon layer on at least an outermost surface of the carbon layer, and in the oxygen-containing carbon layer, a carbon atom and an oxygen atom are present in a state of a compound where a carbon atom and an oxygen atom are chemically bonded to each other.

7. A method for manufacturing a negative electrode active material for a non-aqueous electrolyte secondary battery, the negative electrode active material comprising a negative electrode active material particle, the method comprising steps of:

   producing a silicon compound particle containing a silicon compound containing oxygen;
   coating at least a part of the silicon compound particle with a carbon material; and
   inserting Li into the silicon compound particle to allow the silicon compound particle to contain $Li_2SiO_3$ as a Li silicate, wherein
   the negative electrode active material particle is produced by these steps,
   the method further comprises a step of selecting, from the negative electrode active material particle which was produced, a product satisfying:

   that the $Li_2SiO_3$ is a material in which at least a part of the $Li_2SiO_3$ is to change into $Li_4SiO_4$ by charging and discharging the negative electrode active material once or more; and
   that an abundance ratio of the $Li_2SiO_3$ is higher than an abundance ratio of the $Li_4SiO_4$ before charging

and discharging the negative electrode active material particle and that the abundance ratio of the $Li_4SiO_4$ is higher than the abundance ratio of the $Li_2SiO_3$ after charge and discharge 100 times, and

the negative electrode active material for a non-aqueous electrolyte secondary battery comprising the negative electrode active material particle is manufactured by using the product.

[FIG. 1]

[FIG. 2]

[FIG. 3]

[FIG. 4]

[FIG. 5]

[FIG. 6]

[FIG. 7]

[FIG. 8]

<table>
<tr><td colspan="2" style="text-align:center"><b>INTERNATIONAL SEARCH REPORT</b></td><td>International application No.<br><br><b>PCT/JP2021/044846</b></td></tr>
</table>

| | |
|---|---|
| **A.** | **CLASSIFICATION OF SUBJECT MATTER** |

*H01M 4/36*(2006.01)i; *H01M 4/48*(2010.01)i; *H01M 4/58*(2010.01)i
FI: H01M4/58; H01M4/36 C; H01M4/48

According to International Patent Classification (IPC) or to both national classification and IPC

| | |
|---|---|
| **B.** | **FIELDS SEARCHED** |

Minimum documentation searched (classification system followed by classification symbols)

H01M4/36; H01M4/48; H01M4/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2016/103113 A1 (SEMICONDUCTOR ENERGY LAB CO LTD) 30 June 2016 (2016-06-30) | 1-7 |
| A | JP 2013-251097 A (TOYOTA INDUSTRIES CORP) 12 December 2013 (2013-12-12) | 1-7 |
| A | WO 2017/208625 A1 (SHIN-ETSU CHEMICAL CO LTD) 07 December 2017 (2017-12-07) | 1-7 |
| A | WO 2019/189747 A1 (OSAKA TITANIUM TECH CO LTD) 03 October 2019 (2019-10-03) | 1-7 |
| A | WO 2017/217077 A1 (SHIN-ETSU CHEMICAL CO LTD) 21 December 2017 (2017-12-21) | 1-7 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 January 2022** | **25 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/044846**

| Patent document cited in search report | | | Publication date (day/month/year) | Patent family member(s) | | | Publication date (day/month/year) |
|---|---|---|---|---|---|---|---|
| WO | 2016/103113 | A1 | 30 June 2016 | JP | 2021-2530 | A | |
| | | | | US | 2017/0338470 | A1 | |
| JP | 2013-251097 | A | 12 December 2013 | (Family: none) | | | |
| WO | 2017/208625 | A1 | 07 December 2017 | US | 2019/0157663 | A1 | |
| | | | | EP | 3467912 | A1 | |
| | | | | CN | 109155407 | A | |
| | | | | KR | 10-2019-0012169 | A | |
| WO | 2019/189747 | A1 | 03 October 2019 | US | 2021/0020942 | A1 | |
| | | | | CN | 111936422 | A | |
| WO | 2017/217077 | A1 | 21 December 2017 | US | 2019/0097217 | A1 | |
| | | | | EP | 3471178 | A1 | |
| | | | | CN | 109075332 | A | |
| | | | | KR | 10-2019-0017785 | A | |

Form PCT/ISA/210 (patent family annex) (January 2015)

REFERENCES CITED IN THE DESCRIPTION

**Patent documents cited in the description**

- JP 2001185127 A
- JP 2002042806 A
- JP 2006164954 A
- JP 2006114454 A
- JP 2009070825 A
- JP 2008282819 A
- JP 2008251369 A
- JP 2008177346 A
- JP 2007234255 A
- JP 2009212074 A
- JP 2009205950 A
- JP H06325765 A
- JP 2015156355 A

**Non-patent literature cited in the description**

- **BATTERY ASSOCIATION OF JAPAN.** Denchi (battery). *Newsletter,* 01 May 2010, 10
- **A. HOHL ; T. WIEDER ; P. A. VAN AKEN ; T. E. WEIRICH ; G. DENNINGER ; M. VIDAL ; S. OSWALD ; C. DENEKE ; J. MAYER ; H. FUESS.** *J. Non-Cryst. Solids,* 2003, vol. 320, 255
- **V. KAPAKLIS.** *J. Non-Crystalline Solids,* 2008, vol. 354, 612
- **MARIKO MIYACHI ; HIRONORI YAMAMOTO ; HIDEMASA KAWAI.** *J. Electrochem. Soc.,* 2007, vol. 154 (4), A376-A380
- **M. YAMADA ; M. INABA ; A. UEDA ; K. MATSUMOTO ; T. IWASAKI ; T. OHZUKU.** *J. Electrochem. Soc.,* 2012, vol. 159, A1630
- **TAEAHN KIM ; SANGJIN PARK ; SEUNG M. OH.** *J. Electrochem. Soc.,* 2007, vol. 154
- **HYE JIN KIM ; SUNGHUN CHOI ; SEUNG JONG LEE ; MYUNG WON SEO ; JAE GOO LEE ; ERHAN DENIZ ; YONG JU LEE ; EUN KYUNG KIM ; JANG WOOK CHOI.** *Nano Lett.,* 2016, vol. 16, 282-288